(19) Europäisches Patentamt
European Patent Office
Office européen des brevets

(11) EP 3 327 655 A1

(12) EUROPEAN PATENT APPLICATION

(43) Date of publication:
30.05.2018 Bulletin 2018/22

(51) Int Cl.:
G06Q 30/08 (2012.01)    G06Q 10/08 (2012.01)
G06Q 10/10 (2012.01)

(21) Application number: 17183529.1

(22) Date of filing: 27.07.2017

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 28.11.2016 PCT/JP2016/085248

(71) Applicant: Kabuku Inc.
Shinjuku-ku
Tokyo 160-0022 (JP)

(72) Inventors:
• MASAHIKO, Adachi
Shinjuku-ku, Tokyo 1600022 (JP)
• MASAHIKO, Inada
Shinjuku-ku, Tokyo 1600022 (JP)

(74) Representative: Serjeants LLP
Dock
75 Exploration Drive
Leicester, LE4 5NU (GB)

(54) INFORMATION PROCESSING APPARATUS

(57) PROBLEM T0 BE SOLVED: To provide a mechanism for achieving appropriate communication between a client and a producer, wh i ch is supposed to be scattered among clients and producers around the world.

SOLUTION: In order to satisfy the delivery condition, it is necessary that an input section for inputting design information and delivery conditions, an extraction sect i on for extract i ng one or more process i ng facilities capable of process i ng based on the design information input by the input section, For each of the processing equipments extracted by the extracting unit in accordance with attribute information of each of the process i ng equipments; a generat i on unit which generates the process i ng condition generated by the generation unit, which is estimated for each of the processing equipments extracted by the extraction unit, And a determination unit that determines a content of the request based on an est i mat i on result that can be sat i sf i ed satisfying the information processing apparatus.

FIG.1

## Description

Technical field

The present invention relates to an information processing apparatus. Background Invention

In recent years, when designing various products, it is necessary to design a three-dimensional CAD system that can handle three-dimensional models.

For example, when design information such as three-dimensional CAD data is input to a processing facility such as a 3D printer, the designed product is manufactured. Generally, a producer having a processing facility manufactures and delivers products after the input of design information from a client is received. However, the client is able to input the design information of various designs, and the producer can possess the processing specifications of various specs as well. For th i s reason, there is a demand for technology to materialize appropriate communication between the client and the producer.

For example, the following Patent Document 1 discloses a technique of temporarily placing a factory conforming to the conditions of specification data (such as data i nd i cat i ng the shape of a product) and determining the order i ng content based on the acquired estimation result.

Prior Patent Document

Patent Document

Patent Document 1: JP-A-2002-63235

Summary of the invention

Problem to be Solved by Invention

However, with the assumption of orders placed for processing equipment in separate locations around the world, an appropriate producer may not be selected only from the viewpoints as to whether or not the specifications of the processing equipment satisfy the conditions of the specification data. Also, on the producer side, there is a risk that the workload for estimation will increase excessively with the assumption of receiving orders from all over the world. For this reason, it is desirable that a mechanism for materializing appropriate communication between the client and the producer is provided.

Means for Solving the Problem

According to an embodiment of the present invention, an information processing apparatus is provided. This includes:

an input unit configured to input a delivery condition with design information and information relating to a geographical factor of a delivery destination

an input unit configured to input the design information input by the input unit

an extraction unit which extracts one or more processing facilities capable of processing on the basis of the geographical factors of the delivery destination included in the delivery condition and the geographical factors included in the attribute information of each of the extracted processing facilities

a generation unit that generates a processing condition in which the delivery condition is corrected on the basis of at least one of the processing conditions; and a processing unit that meets the processing condition generated by the generation unit, which is estimated for each of the processing equipments extracted by the extraction unit

a determination unit that obtains an estimation result indicating that processing is possible and automatically determines the request location and the content of the request based on a preset selection criterion.

The determining unit may assign a successful bid probability greater than 0 to each processing facility capable of meeting the processing condition and determine the content of the request according to the winning bid probability.

The determining unit determines that the process i ng facility that meets the processing standards at a high level has a higher fall

You can assign a bill probability.

The information processing apparatus may further include a notifying unit for notifying a winning bid probability.

The determination unit may determine the content of the request further based on at least one of a past processing result or a degree of customer satisfaction in the processing facility.

The processing condition may be information in which the delivery condition is modified based on a geographical factor related to at least one delivery destination and the processing facility.

The delivery condition includes delivery date and delivery destination, the attribute information includes information indicating the location of the processing facility, and the processing condition includes a standard transportation period from the processing facility to the delivery destination. This may include the processing period calculated backwards from the delivery date.

## EFFECT OF THE INVENTION

As described above, according to the present invention, a mechanism for materializing appropriate communication between a client and a producer, assumed to be from all over the world is provided.

## BRIEF DESCRIPTION OF THE DRAWINGS

FIG. 1 is a view for explaining an overview of a manufacturing system according to an embodiment of the present invention.

FIG. 2 is a block diagram showing an example of a logical configuration of a server according to the present embodiment.

FIG. 3 is a diagram for describing a process of allocating a winning bid probability according to the present embodiment.

FIG. 4 is a flowchart showing an example of a flow of determination processing of a request content executed in a server according to the present embodiment.

FIG. 5 is a block diagram showing an example of a hardware configuration of the information processing apparatus according to the present embodiment.

## CONFIGURATION FOR IMPLEMENTING THE INVENTION

The preferred embodiments of the present invention will now be described in detail with reference to the drawings below. In the present specification and the drawings, the same reference numerals are given to the constituent elements having substantially the same functional configuration, and redundant explanation will be omitted.

In addition, in this specification and the drawings, elements having substantially the same functional configuration may be distinguished by attaching different alphabets after the same reference numerals. For example, a plurality of elements having substantially the same functional configuration are distinguished as in factories 30A, 30B and 30C as necessary. However, when it is not necessary to particularly distinguish each of a plurality of elements having substantially the same functional configuration, only the same reference numerals are attached. For example, when there is no need to particularly distinguish factories 30 A, 30 B and 30 C, they are simply referred to as factory 30.

<1. Overview>

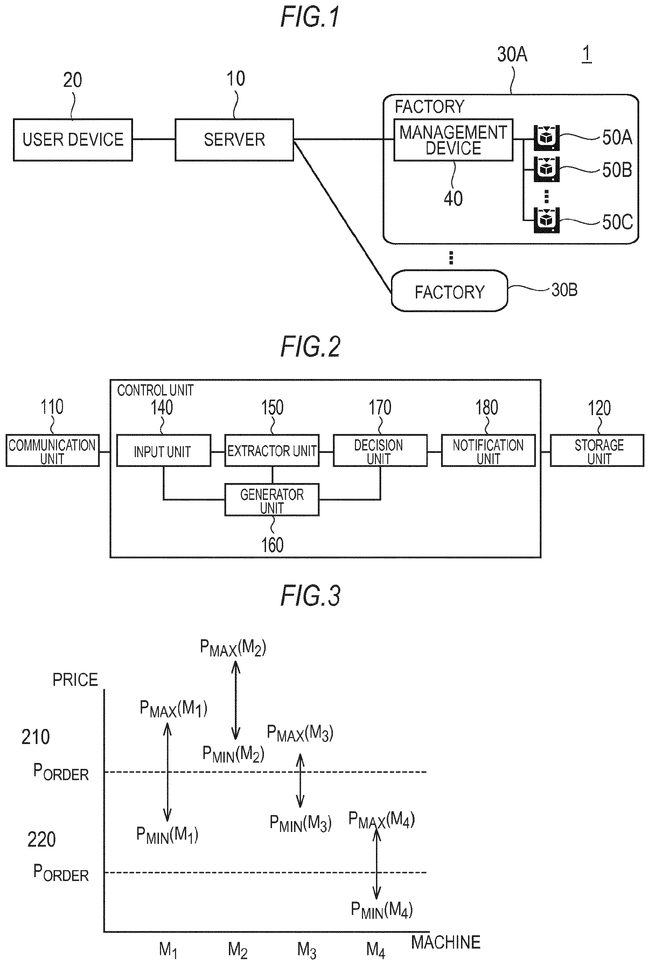

First, with reference to FIG. 1, an outline of a manufacturing system 1 according to one embodiment of the present invention will be described.

FIG. 1 is a diagram for explaining the outline of a manufacturing system 1 according to an embodiment of the present invention. As shown in FIG. 1, the manufacturing system 1 according to the present embodiment includes a server 10, a user device 20, and one or more factories 30 (that is, factories 30 A and 30 B). Factory 30 A includes a management device 40 and one or more processing facilities 50 (i.e. processing facilities 50 A, 50 B, and 50 C). Each constituent element of the manufacturing system 1 will be described below.

(Server 10)

The server 10 is an information processing apparatus having a function to mediate communication between a client and a producer. A person who operates the server 10 is also called an intermediary.

Specifically, the server 10 performs matching a request for product processing from a client and a processing facility for performing requested product processing. For example, the server 10 receives the design information and the delivery condition from another user device 20, and selects the processing facility 50 that requests processing based on the design information. Then, the server 10 transmits a processing instruction to the factory 30 having the selected processing facility 50, and controls the processing of the product and the delivery processing of the product to the delivery destination. Note that the client and the delivery destination may be different from each other. In this specification, it is assumed that the client and the delivery destination are the same. Further, the server 10 mediates payment of fees from the client to the producer.

(User device 20)

The user device 20 is a device operated by a user (requester). For example, the user device 20 accepts input of design information and delivery conditions to be described later, and transmits the input information to the server 10.

(Factory 30)

Factory 30 is a facility of a processor (producer) having one or more processing facilities 50.

(Management device 40)

The management device 40 is a device that manages the processing equipment 50 in factory 30. The management apparatus 40 has a communication function and performs data transmission / reception with the server 10. For example, the management device 40 transmits various information of the processing facility 50 in factory 30 to the server 10, and controls the processing facility 50 so as to perform the instructed processing based on the processing instruction received from the server 10. In this specification, the management apparatus 40 manages the processing facility 50, but the server 10 may have the function of the management apparatus 40 and directly manage the processing facility 50.

(Processing facility 50)

The processing facility 50 is an apparatus for manufacturing products by performing var i ous processing. For example, the processing facility 50 is realized by a layered molding apparatus such as a 3D printer, a cutting machine such as a 3D plotter, an NC machining facility for performing NC machining (Numerical Control machining), and the like. The processing facility 50 performs processing based on the design information output from the management device 40. Processing based on design information means to produce a modeled object having a structure according to, for example, CAD data with a specified material.
The outline of the manufacturing system 1 according to the present embodiment has been described above. Subsequently, a configuration example of the server 10 according to the present embodiment will be described with reference to FIGS. 2 and 3.

<2. Server configuration example>

FIG. 2 is a block diagram showing an example of a logical configuration of the server 10 according to this embodiment. As shown in FIG. 2, the server 10 includes a communication unit 110, a storage unit 120, and a control unit 130.

(1) Communication unit 110

The communication unit 110 is a communication module for exchanging data with other devices by wire / wireless. The communication unit 110 communicates directly with the user device 20 and the management device 40, or indirectly via a communication node.

(2) Storage unit 120

The storage unit 120 is a portion for recording and reproducing data with respect to a predetermined recording medium. For example, the storage unit 120 stores attribute information of each processing facility 50. The attribute information includes, for example, information indicating the location of the processing facility 50 such as the address of factory 30. Bes i des, the attribute information may include, for example, molding ability information for each material of the processing facility 50. The molding capability information is information indicating the molding capability of the processing facility 50 including the thickness (minimum thickness / maximum thickness), precision, molding size, and the like that can be molded by the process i ng facility 50. For example, the th i ckness may be regarded as the distance until the perpendicular from the surface intersects the other surface, or it may be regarded as the distance between two arbitrary points on the opposing surface, or any other arbitrary. This may be obtained by other standards.

Accuracy is the smallest unit that can be processed. Accuracy may be obtained, for example, as the minimum controllable length of laminating / not laminating materials in 3D printers, or as the sharpest angle that can be produced. For example, the size may be regarded as the max i mum size that the process i ng facility 50 can manufacture. Furthermore, the attribute information may include price information including the material cost for each material, operation time unit cost, which is cost per unit time for operating the processing equipment 50, labor cost, and so on. The material cost is the unit price per unit amount, and the labor cost is the price per manufacturing.

(3) Control unit 130

The control unit 130 functions as an arithmetic processing unit and a control unit and controls the overall operation in the server 10 according to various programs. As shown in FIG. 2, the control unit 130 functions as the input unit 140, the extraction unit 150, the generation unit 160, the determination unit 170 and the notification unit 180.

(3-1) Input section 140

The input unit 140 has a function of accepting the input of design information and delivery conditions. The design information is information including, for example, information indicating the shape of a product, information indicating a material to be processed, etc.. The delivery condition is information including delivery date, information indicating a delivery destination such as an address, and information indicating a price. The data indicating the shape of the product is, for example, CAD data, CG (computer graphics) data, or the like. The shape indicated by this data may be a two-dimensional shape, a three-dimensional shape, a color, a pattern, or the like may be attached.

(3-2) Extractor 150

The extraction unit 150 has a function of extracting one or more processing facilities 50 that can be processed based on the design information input by the input unit 140. For example, with reference to the molding capability information stored in the storage unit 120, the extraction unit 150 extracts one or more processing facilities 50 hav i ng a molding ability capable of being processed based on the design information.

(3-3) Generating Unit 160

The generat i ng un i t 160 has a funct i on of generat i ng process i ng cond i t i ons for meet i ng the delivery conditions input by the input unit 140 according to each attribute information of the processing facility 50. Here, the processing condition is information in which the delivery conditions are corrected based on geographical factors related to either the delivery destination or the producer (processing facility 50). Specifically, the generat i ng unit 160 generates a process i ng cond i t i on by applying a correction to the delivery condition to absorb geographical factors either the producer and or the delivery destination. Then, the producer makes estimates for performing processing by meeting this processing condition. Production conditions that absorb geographical factors are generated so that producers can make estimates without being restricted by geographical factors and reduce the workload for estimation. Therefore, even if a request for estimation comes from anywhere in the world, it is possible to estimate it easily. In addition, because it is possible to prevent estimation errors due to geographical factors, it is possible to prevent the selection of inappropriate producers.

For example, the generation unit 160 refers to the information indicating the location of the processing facility 50 stored in the storage unit 120 and the information indicating the delivery destination included in the delivery condition, and generates standard transportation means from the processing facility 50 to the delivery destination. A machining condition including a machining period obtained by inversely calculating a period from the delivery date may be generated. As a result, the producer does not consider the geographical factors such as the distance between the location of the processing facility 50 and the delivery destination and the geographical factors such as available transportation agencies, but only the circumstances concerning the processing facility 50 such as the operating condition of the processing facility 50 and the molding ability It is possible to make an estimate taking into consideration. Other geographical factors include, for example, laws of each country, customs procedures, transportation agencies, religions, holidays, etc.

In addition to the above processing period, processing conditions may include information indicating price or the like. The process i ng period refers to the period until the completion of the shipping process after receiving the order. In addition, the standard transportat i on per i od means the transportat i on per i od when transport i ng by using general transportation means assumed to be used.

(3-4) Deciding section 170

Based on the estimation result indicating that the processing meeting the processing condition generated by the generating unit 160 is possible, the determining unit 170 calculates the content of the request. Specifically, the determining unit 170 requests, from the processing facility 50, which is estimated from the processing facility 50 having the molding ability capable of processing based on the design information, meeting the processing condition (that is, the processing request is made by processing facility 50) and the delivery date, price, etc.

The estimation result includes, for example, a delivery date and an estimate of the price. For one processing facility 50, multiple estimation results with different delivery times and prices may be obtained. Also, the estimation result may include an estimate of the delivery date and price when using special transport means such as airmail and motorcycle. The request content is information on one estimation result selected from a plurality of estimation results, and includes, for example, a processing facility 50 for requesting processing, information on a delivery date requested and a requested price.

The determination unit 170 determines the content of the request in reverse auction form. Specifically, the determining unit 170 assigns a successful bid probability greater than 0 to each of the processing facilities 50 capable of processing meeting the processing conditions according to the estimation result, and determines the contents of the request according to the bidding probability. As a result, for example, the processing facility 50 which estimated the price at the lowest price always makes a bid (that is, receiving a request) is avoided so that motivation to participate in auction participation by other producers can be maintained.

At that time, the determining unit 170 assigns a higher bidding probability to the processing facility 50 that satisfies the processing condition at a high level. For example, the determining unit 170 assigns a higher bidding probability to a processing facility 50 whose price is estimated cheaper. This can encourage producers to lower their prices. The same applies to conditions other than price, such as the processing period.

The successful bid probability may be notified to the producer before a successful bid is determined. In that case, since it is expected that the producer will lower the price in order to further increase the winning probability, price competition among multiple producers can be encouraged.

A specific example relating to the allocation of a winning bid probability will be described below.

(Assignment example 1)

For example, the determining unit 170 may assign the bidding probability based on the balance between the delivery date and the price. In this example, as a result of estimation for one processing facility 50, a combination of the highest price and the shortest delivery date and a combination of the lowest price and the normal delivery date are obtained. Hereinafter, with reference to FIG. 3, an example of assigning a successful bid probability based on the balance between the delivery date and the price will be described in detail.

FIG. 3 is a diagram for explaining the process of allocating a winning bid probability according to this embodiment. The arrow at both ends in FIG. 3 shows the estimation result of each of the processing equipment 50 (M 1 to M 4). Each processing facility 50 (M1 to M4) can process between the maximum price PMAX of the shortest delivery date and the lowest price PMIN of the normal delivery date.

First, the determining unit 170 selects the processing apparatus 50 including a price indicated by the delivery condition (hereinafter also referred to as an order price) PORDER between the highest price PMAX and the lowest price PMIN. For example, in the example shown in FIG. 3, when the order price PORDER is a value indicated by reference numeral 210, the determining unit 170 selects M 1, M 3, and M 4 as the processing facility 50 capable of processing satisfying the processing conditions. Then, the bidding probability R of each of the selected processing facilities 50 is calculated according to the following mathematical expression.

$$R(M_i) = L(M_i) \times B(M_i) / L_{SUM} \cdots (\text{formula } 1)$$

$$L(M_i) = \{P_{ORDER} - P_{MIN}(M_i)\} / \{P_{MAX}(M_i) - P_{MIN}(M_i)\}$$

$$\cdots (\text{formula } 2)$$

$$L_{SUM} = L(M_1) \times B(M_1) + L(M_3) \times B(M_3) + L(M_4) \times B(M_4) \cdots (\text{formula 3})$$

Where i is the index of the processing facility 50. L (Mi) is the term concerning the difference between the highest price PMAX and the lowest price PMIN. Referring to Equation 2 above, the value obtained by subtracting the lowest price PMIN from the order pr i ce PORDER is normalized by the d i fference between the h i ghest pr i ce PMAX and the lowest price PMIN. As a result, the bidding probability of the processing facility 50 whose order price PORDER is close to the maximum price PMAX is calculated higher than the processing facility 50 which actually isn't. Therefore, when processing with the same order price PORDER, it becomes possible to make a successful bid for producers with higher satisfaction, and it is possible to improve producer motivation. B (Mi) is a bias term set for each processing facility 50. The bias term is set based on at least one of past machining results or customer satisfaction in the machining facility 50. For example, as the degree of customer satisfaction is higher, a larger value is set
The successful bid probability will be improved further.

The order price means the fee paid by the client. If the estimated price is lower than the order price, the difference can be the profit of the producer. The order price may be set by the requester or may be adjusted or set by the intermediary.

On the other hand, in the example shown in FIG. 3, when the price PORDER is the value indicated by reference numeral 220, the determining unit 170 selects M 4 as the processing facility 50 capable of process i ng that satisfies the processing condition. In this case, the determining unit 170 sets the successful bid probability R (M 4) to 100%.

(Assignment example 2)

This example is where one estimation result is obtained from one processing facility 50. For example, as a result of estimation for one processing facility 50, a combination of a normal price and a normal delivery date is obtained. In this case, the determining unit 170 treats the normal price as the lowest price and the order price as the highest price. Then, the determining unit 170 calculates a winning bid probability using Equation 4 below instead of Equation 1, Equation 3, and Equation 2.

$$L(M_i) = P_{ORDER} - P_{MIN}(M_i) \quad (\text{Equation 4})$$

A fee equivalent to the estimated normal price may be paid to the producer. In that case, the difference between the order pr ice paid by the client and the ord i nary pr ice paid to the producer may be the benefit of the intermediary.

In the above, concrete examples concerning the allocation of the winning bid probability were explained. The determining unit 170 may appropriately combine these specific examples to assign a winning bid probability. For example, the determining unit 170 may use assignment example 1 for the processing equipment 50 that obtained a plurality of estimation results, and assignment example 2 for the processing equipment 50 that obtained one estimation result. However, in the case where the processing facility 50 which obtained a plurality of estimation results and the processing facility 50 which obtained one estimation result coexist, allocation example 2 is desirably used for all the processing facilities 50. This is to prevent the influence of the difference between Equation 2 and Equation 4, for example, the occurrence of imbalance without normalization, between the plurality of processing facilities 50.

(3-5) Notifying Unit 180

The notification unit 180 has a function of notifying the producer the winning bid probability. For example, the notification unit 180 notifies the processing facility 50 or the corresponding management device 40 of the successful bid probability assigned by the determination unit 170. Thus, as described above, price competition among a plurality of producers can be promoted.

The configuration example of the server 10 according to the present embodiment has been described above. Next, an example of operation processing of the server 10 according to the present embodiment will be described.

<3. Operation processing example>

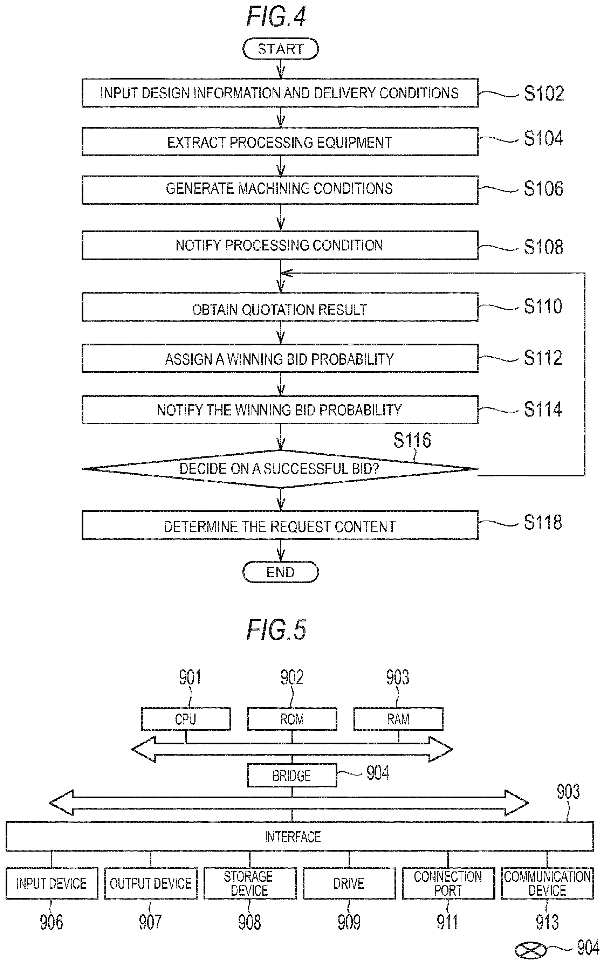

FIG. 4 is a flowchart showing an example of the flow of determination processing of request content executed in the server 10 according to the present embodiment.

As shown in FIG. 4, firstly, the input unit 140 inputs design information and delivery conditions based on the information received from the user device 20 (step S 102). Next, the extracting unit 150 extracts the processing facility 50 having the molding ability capable of processing based on the design information (step S104). Next, the generating unit 160 generates processing conditions for satisfying the delivery condition according to each attribute information of the extracted processing facility 50 (step S 106), and transmits the processing condition to the processing facility 50 or the corresponding management device 40 (Step S108).

Next, the determination unit 170 acquires the estimation result from the processing facility 50 or the management device 40 notified of the processing condition (step S 110). Next, in step S112, the determining unit 170 assigns a higher bidding probability to the processing facility 50 that satisfies the processing condition and satisfies the processing condition at a higher level, greater than zero. Next, the notification unit 180 notifies the producer of the assigned winning bid probability (step S 114).

Then, the determining unit 170 determines whether to make a bid (step S 116). For example, the determining unit 170 may determine whether or not to make a bid by providing conditions relating to the elapsed time from the notice of the processing condition, the estimation frequency, the bidding frequency, and the like.

If it is determined not to make a successful bid (step S 116 / NO), the process returns to step S 110 again. Thereby, the server 10 wa i ts for the acquisition of the est i mat i on result again from the processing facility 50, and when the estimation result is obtained again, the bidding probability is reassigned.

On the other hand, if determined to make a bid (step S 116 / YES), the determination unit 170 determines the content of the request according to the winning bid probability (step S 118). As a result, the process of determining the content of the request is terminated. Thereafter, the server 10 transmits a processing instruction including the content of the request to the processing facility 50 of the request destination, and controls the processing of the product and the delivery processing of the product to the delivery destination.

<4. Hardware configuration example>

Finally, with reference to FIG. 5, the hardware configuration of the information processing apparatus according to this embodiment will be described. FIG. 5 is a block diagram showing an example of the hardware configuration of the information processing apparatus according to this embodiment. Note that the information processing apparatus 900 shown in FIG. 5 can realize the server 10 shown in FIG. 2, for example. Information processing by the server 10 according to the present embodiment is realized by cooperation of software and hardware described below.

As shown in FIG. 5, the information processing apparatus 900 includes a CPU (Central Processing Unit) 901, a ROM (Read Only Memory) 902, a RAM (Random Access Memory) 903, and a host bus 904 a. Furthermore, the information processing apparatus 900 includes a bridge 904, an external bus 904 b, an interface 905, an input device 906, an output device 907, a storage device 908, a drive 909, a connection port 911, and a communication device 913. Instead of or in addition to the CPU 901, the information processing apparatus 900 may have a processing circuit such as a DSP or an ASIC.

The CPU 901 functions as an arithmetic processing unit and a control unit, and controls the overall operation in the information processing apparatus 900 according to various programs. Further, the CPU 901 may be a microprocessor. The ROM 902 stores programs used by the CPU 901, operation parameters, and the like. The RAM 903 temporarily stores a program to be used in the execution of the CPU 901, parameters and the like which are appropriately changed in its execution. For example, the CPU 901 may form the control unit 130 shown in FIG. 2.

The CPU 901, the ROM 902, and the RAM 903 are mutually connected by a host bus 904 a including a CPU bus and the like. The host bus 904 a is connected to an external bus 904 b such as a PCI (Peripheral Component Interconnect / Interface) bus via the bridge 904. Note that it is not always necessary to separately configure the host bus 904 a, the bridge 904, and the external bus 904 b, and these functions may be mounted on one bus.

The input device 906 is realized by a device such as a mouse, a keyboard, a touch panel, a button, a microphone, a switch, a lever, and the like, into which information is input by the user. Furthermore, the input device 906 may be, for example, a remote control device using infrared rays or other radio waves, or may be an externally connected device such as a mobile phone or a PDA corresponding to the operation of the information processing device 900 . Moreover, the input device 906 may include, for example, an input control circuit or the like that generates an input signal based on information input by the user using the above input means and outputs it to the CPU 901. By operating the input device 906, the user of the information processing apparatus 900 can input various data and instruct processing operations to the information processing apparatus 900.

The output device 907 is formed by a device capable of visually or audibly notifying the user of the acquired information. Examples of such devices include display devices such as CRT display devices, liquid crystal display devices, plasma display devices, EL display devices, laser projectors, LED projectors and lamps, audio output devices such as speakers and headphones, pr inter devices, etc.. The output device 907 outputs, for example, a result obtained by various processes performed by the information processing device 900. Specifically, the display device visually displays the results obtained by the various processes performed by the information processing device 900 in various formats such as text, image, table, graph, and the like. On the other hand, the audio output device audibly outputs an audio signal composed of reproduced audio data, audio data and the like into an analog signal.

The storage device 908 is a device for storing data formed as an example of a storage unit of the information processing device 900. The storage device 908 is realized by, for example, a magnetic storage device such as an HDD, a semiconductor storage device, an optical storage device, a magneto-optical storage device, or the like. The storage device 908 may include a storage medium, a recording device that records data in the storage medium, a reading device that reads data from the storage medium, a deletion device that deletes data recorded in the storage medium, and the like. The storage dev i ce 908 stores programs executed by the CPU 901, var i ous data, var i ous types of data obta i ned from the outs i de, and the like. For example, the storage dev i ce 908 can form the storage unit 120 shown in FIG. 2.

The drive 909 is a reader / writer for a storage medium, which is incorporated in the information processing device 900 or externally attached thereto. The drive 909 reads information recorded on a removable storage medium such as a mounted magnetic disk, optical disk, magneto-optical disk, semiconductor memory, or the like, and outputs the information to the RAM 903. Further, the drive 909 can also write information to the removable storage medium.

The connection port 911 is an interface connected to an external device and is a connection port with an external device that can transmit data by USB (Universal Serial Bus) or the like, for example.

The communication device 913 is, for example, a communication interface formed by a communication device or the like for connecting to the network 920. The communication device 913 is, for example, a communication card for wired or wireless LAN (Local Area Network), LTE (Long Term Evolution), Bluetooth (registered trademark) or WUSB (Wireless USB). Furthermore, the communication device 913 may be a router for optical communication, a router for Asymmetric Digital Subscriber Line (ADSL), a modem for various communication, or the like. The communication device 913 can transmit and receive signals and the like to and from the Internet and other communication devices in accordance w i th a predetermined protocol such as TCP / IP, for example. For example, the communication device 913 can form the communication unit 110 shown in FIG. 2.

Note that the network 920 is a wired or wireless transmission path of information transmitted from a device connected to the network 920. For example, the network 920 may include a public line network such as the Internet, a telephone network, a satellite communication network and the like, various LAN (Local Area Network) including Ethernet (registered trademark), a WAN (Wide Area Network), and the like. Further, the network 920 may include a dedicated network such as an IP-VPN (Internet Protocol-Virtual Private Network).

An example of a hardware configuration capable of realizing the functions of the information processing apparatus 900 according to the present embodiment has been described above. Each of the above-described constituent elements may be realized by using a general-purpose member, or may be realized by hardware specialized for the function of each constituent element. Therefore, it is possible to appropriately change the hardware configuration to be used according to the technical level at the time of implementing this embodiment.

Note that a computer program for realizing each funct ion of the information processing apparatus 900 according to the present embodiment as described above can be produced and mounted on a PC or the like. It is also possible to provide a computer readable recording medium in which such computer program is stored. The recording medium is, for example, a magnetic disk, an optical disk, a magneto-optical disk, a flash memory, or the like. Furthermore, the above computer program may be delivered via, for example, a network without using a recording medium.

<5. Summary>

One embodiment of the present invention has been described in detail above with reference to FIGS. 1 to 5. According to the above embodiment, the server 10 to which the design information and the delivery conditions are input extracts one or more process i ng facilities 50 that can be processed based on the design information, sets the processing conditions for meeting the delivery conditions to the processing facility 50 , determines the content of the request based on the estimation result that is estimated for each of the extracted process i ng facilities and indicates that processing satisfying the processing conditions is possible. Since the processing conditions for meeting the delivery conditions are generated according to the attribute information of each processing facility 50, the producer can estimate wi thout cons i der i ng the geographical factors of whether the producer or the delivery destination is possible.. This not only reduces the workload for estimation but also prevents erroneous estimates due to geographical factors. With this, it enables appropriate communication between the client and the producer.

Although the preferred embodiments of the present invention have been described in detail with reference to the accompanying drawings, the present invention is not limited to such examples. It is obvious that those anyone with average knowledge of the technical area can make various modifications or modifications within the scope of the technical ideas described in the claims, By all means, these are understood to belong to the technical scope of the present invention.

It should be noted that the series of processing by each device described in this specification may be realized by using software, hardware, or a combination of software and hardware. The program constituting the software is stored in advance in, for example, a storage medium (non-transitory media) provided inside or outside each device. Each program is read into the RAM, for example, when executed by a computer, and executed by a processor such as a CPU.

Also, the processes described with reference to flowcharts in this specification are not necessarily executed in the order shown. Some processing steps may be executed in parallel. Also, additional processing steps may be employed and some processing steps may be omitted.

1 Manufacturing system
10 servers
110 Communication unit
120 Storage
130 Control unit
140 Input section
150 extractor
160 Generator
170 Decision part
180 notification section
20 User equipment
30 factories
50 Processing facility

**Claims**

1. An information processing apparatus including;
   an input unit for inputting delivery conditions including design information and geographical factors of the delivery destination;
   an extraction unit that extracts one or more processing facilities capable of processing based on the design information input by the input unit;
   a generating unit that generates a processing condition by modifying the delivery condition based on at least one of the geographical factor of the delivery destination included in the delivery condition and the geographical factor included in each attribute information of the extracted processing equipment;
   and a processing unit that satisfies the processing condition generated by the generation unit, which is estimated for each of the processing equipments extracted by the extraction unit and a determination unit that obtains an estimation result indicating that processing is possible and automatically determines the request destination and the content of the request based on a preset selection criterion.

2. An information processing apparatus according to claim 1,
   wherein the determining unit assigns a successful bid probability greater than 0 according to the estimation result to each of the processing equipments that can be processed by meeting the processing condition and determines the request destination and the request content according to the winning bid probability.

3. An information processing apparatus according to claim 2,
   wherein the determining unit assigns a higher bidding probability to the processing facility by meeting the processing condition at a higher level.

4. An information processing apparatus according to claim 2 or 3, further comprising a notifying unit that notifies a producer by having the processing facility a winning bid probability.

5. An information processing apparatus according to any one of claims 1 to 4, wherein the determination unit determines the request destination and the request content further based on at least one of the past processing result or the customer satisfaction degree in the processing facility.

6. The information process i ng apparatus accord i ng to any one of claims 1 to 5, where i n the processing condition is information in which the delivery condition is corrected based on a geographical factor related to at least one of a delivery destination and the processing facility.

7. An information processing apparatus according to claim 6,
   wherein the delivery condition includes information indicating a delivery date and a delivery destination,

the attribute information includes information indicating a location of the processing facility,
the processing condition includes a processing period in which a standard transportation period from the processing facility to the delivery destination is inversely calculated from the delivery date.

## FIG.1

USER DEVICE 20 — SERVER 10 — FACTORY 30A

FACTORY 30A
MANAGEMENT DEVICE 40
50A
50B
50C

1

FACTORY 30B

## FIG.2

COMMUNICATION UNIT 110

CONTROL UNIT
INPUT UNIT 140 — EXTRACTOR UNIT 150 — DECISION UNIT 170 — NOTIFICATION UNIT 180
GENERATOR UNIT 160

STORAGE UNIT 120

## FIG.3

PRICE

210

$P_{ORDER}$

220

$P_{ORDER}$

$P_{MAX}(M_2)$

$P_{MAX}(M_1)$

$P_{MIN}(M_2)$

$P_{MAX}(M_3)$

$P_{MIN}(M_1)$

$P_{MIN}(M_3)$

$P_{MAX}(M_4)$

$P_{MIN}(M_4)$

$M_1$    $M_2$    $M_3$    $M_4$    MACHINE

## FIG.4

```
( START )
   │
   ▼
INPUT DESIGN INFORMATION AND DELIVERY CONDITIONS ── S102
   │
   ▼
EXTRACT PROCESSING EQUIPMENT ── S104
   │
   ▼
GENERATE MACHINING CONDITIONS ── S106
   │
   ▼
NOTIFY PROCESSING CONDITION ── S108
   │
   ▼
OBTAIN QUOTATION RESULT ── S110
   │
   ▼
ASSIGN A WINNING BID PROBABILITY ── S112
   │
   ▼
NOTIFY THE WINNING BID PROBABILITY ── S114
   │
   ▼              S116
DECIDE ON A SUCCESSFUL BID?
   │
   ▼
DETERMINE THE REQUEST CONTENT ── S118
   │
   ▼
( END )
```

## FIG.5

```
   901           902           903
  ┌─────┐      ┌─────┐      ┌─────┐
  │ CPU │      │ ROM │      │ RAM │
  └─────┘      └─────┘      └─────┘
     ◄══════════════════════════►
            ┌────────┐
            │ BRIDGE │── 904
            └────────┘
                                      903
  ◄═══════════════════════════════════►
┌────────────────────────────────────┐
│             INTERFACE              │
└────────────────────────────────────┘
   │        │        │       │        │          │
┌──────┐┌────────┐┌───────┐┌─────┐┌─────────┐┌──────────────┐
│INPUT ││OUTPUT  ││STORAGE││DRIVE││CONNECTION││COMMUNICATION │
│DEVICE││DEVICE  ││DEVICE ││     ││  PORT    ││   DEVICE     │
└──────┘└────────┘└───────┘└─────┘└─────────┘└──────────────┘
  906     907       908     909      911          913
                                              ⊗── 904
```

13

**Europäisches Patentamt**
**European Patent Office**
**Office européen des brevets**

# EUROPEAN SEARCH REPORT

Application Number

EP 17 18 3529

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CA 2 953 667 A1 (KABUKU INC [JP]) 30 December 2015 (2015-12-30) * figure 1 * ----- | 1-7 | INV. G06Q30/08 G06Q10/08 G06Q10/10 |
| | | | TECHNICAL FIELDS SEARCHED (IPC) G06Q |

The present search report has been drawn up for all claims

| Place of search | Date of completion of the search | Examiner |
|---|---|---|
| Munich | 5 October 2017 | Giemsa, Falk |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 18 3529

This annex lists the patent family members relating to the patent documents cited in the above-mentioned European search report.
The members are as contained in the European Patent Office EDP file on
The European Patent Office is in no way liable for these particulars which are merely given for the purpose of information.

05-10-2017

| Patent document cited in search report | | Publication date | Patent family member(s) | | Publication date |
|---|---|---|---|---|---|
| CA 2953667 | A1 | 30-12-2015 | AU | 2015282167 A1 | 12-01-2017 |
| | | | CA | 2953667 A1 | 30-12-2015 |
| | | | CN | 106662863 A | 10-05-2017 |
| | | | EP | 3163392 A1 | 03-05-2017 |
| | | | JP | 5894227 B2 | 23-03-2016 |
| | | | JP | 2016009351 A | 18-01-2016 |
| | | | TW | 201608403 A | 01-03-2016 |
| | | | WO | 2015198759 A1 | 30-12-2015 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002063235 A